# EUROPEAN PATENT SPECIFICATION

(11) **EP 3 336 279 B1**
(45) Date of publication and mention of the grant of the patent: **01.05.2019**
(21) Application number: 17188690.6
(22) Date of filing: 31.08.2017
(51) Int. Cl.: E04G 1/24, E04G 1/30, E04G 5/16, E06C 7/14, E06C 7/42, F16B 2/18, F16B 7/04, E06C 1/397, F16B 7/14, E06C 1/39, F16B 2/04, F16B 7/18

(54) **MOBILE SCAFFOLDING**
MOBILES GERÜST
ÉCHAFAUDAGE ROULANT

(30) Priority: 19.12.2016 IT 201600127908
(43) Date of publication of application: 20.06.2018
(73) Proprietor: Gierre S.r.L., 23854 Olginate (LE) (IT)
(72) Inventor: TURRISI, Giorgio, 23854 Olginate (Lecco) (IT)
(74) Representative: Tarabbia, Luigi

(56) References cited:
- IT-A1- VR20 110 066
- US-A1- 2003 213 330
- US-A1- 2007 056 999

## Description

The present invention relates to a mobile scaffolding.

The mobile scaffolding may include both ladders and, in particular, structures commonly known as access platforms, i.e. mobile structures mainly used for small building works such as plastering or painting.

The mobile scaffoldings of the known type are tubular structures, made of aluminum or steel, having variable base dimensions, proportional to the height at which work is to be performed.

Typically, such scaffoldings are used for finishing or maintenance work at heights ranging from 2 to 20 metres.

The scaffolding may be equipped with at least a pair of wheels which allow the structure to be manually moved, at leisure, in the workplace.

The access platforms comprise a frame composed of two pairs of vertical lateral shoulder with steps and at least one pair of horizontal cross members connecting together the two pairs of vertical shoulders.

A stiffening element supports the articulated quadrilateral defined by the frame, avoiding the bending of the structure.

The stiffening elements are, for example, tie rods, arranged diagonally in the shape of a cross, connecting the shoulders to each other.

Finally, at least one supporting plane on which the operators stand is placed transversely with respect to the lateral shoulders.

Near or at each step, the vertical shoulders have holes, aligned with the axis of the steps, to connect the tie rods.

Connecting the tie rods to the lateral shoulders by means of a quick-coupling mechanism permanently connected to each end of each tie rod is known from EP2314797, on behalf of the same Applicant The quick-coupling mechanism includes an elastically deformable screw anchor. A pin is inserted slidably inside the screw anchor and has a flanged head that axially compresses the screw anchor to expand it radially.

Such solution involves the use of an actuating member (handle or knob) for each screw anchor. The actuating member must be permanently associated to each end of each tie rod since it determines and maintains the axial deformation of the screw anchor. The total number of actuating members is therefore quite high since two of them are required for each tie rod. Furthermore, the constant presence of the actuating members on the scaffolding introduces an intrinsic lack of safety of the structure since an operator may inadvertently move them until unlocking the tie rod.

In addition, the expansion of the anchor of EP2314797, and hence the effectiveness of the fastening, strongly depends on the chemical-physical characteristics of the used material, which, if not reproduced uniformly around the axis of the pin, can generate an irregular or asymmetrical expansion. Such chemical-physical characteristics may also undergo unexpected or uneven changes over time due to material aging or moisture and/or dirt infiltration and, therefore, also the locking effectiveness may degrade over time.

In addition to the above, the quick-coupling mechanism of EP2314797 requires an anchor made with a high amount of expandable material to allow a proper fastening of the tie rods.

Finally, the expansion of the anchor of EP2314797 also depends on the geometrical features of the mechanism, in particular on the effective length of the pin and/or the shape of cam elements, for example, associated with the actuating members, which may be subject to change and alteration over time due to loosening or wearing. ITVR20110066 A1 discloses a mobile scaffolding according to the preamble of claim 1.

The object of the present invention is to provide a mobile scaffolding that is free from one or more of the drawbacks described above. Such object is achieved by a mobile scaffolding according to claim 1.

In particular, an object of the present invention is to provide a mobile scaffolding which can be quickly and easily assembled, guaranteeing high levels of security in any condition of use and consistently during the useful life of the scaffolding.

Another object of the present invention is to provide a mobile scaffolding which keeps both reduced costs and a small number of component. According to the present invention, a mobile scaffolding comprising the characteristics present in one or more of the appended claims is provided. The dependent claims correspond to possible embodiments of the invention.

In particular, with reference to one aspect, the present invention relates to a mobile scaffolding comprising at least two pairs of side shoulders suitable to be arranged vertically parallel to each other. The lateral shoulders have housings communicating with the outside. The scaffolding also comprises at least one tie rod suitable to be disposed between the pairs of lateral shoulders and at least one quick-coupling mechanism permanently connected to one end of the tie rod and comprising an elastically deformable screw anchor between a non-deformed configuration in which it can be axially inserted and removed within one of the housings and a deformed configuration in which it interferes with walls delimiting the housing for connecting the end of the tie rod to the side shoulders. The quick-coupling mechanism comprises expansion means disposed in an internal cavity of the screw anchor and configured to assume a rest configuration in which the screw anchor is in the non-deformed configuration and a locking configuration in which the screw anchor is in the deformed configuration. In the locking configuration, the expansion means generate an expansion force directed radially with respect to the screw anchor. The expansion force pushes from the inside the screw anchor against the walls delimiting the housing.

In this way, it is possible to quickly and easily assemble the scaffolding by making the locking independent from the presence of a control element and thus allowing detachment once locking is achieved. In addition, the locking is particularly effective and homogeneous as it occurs by pushing from the inside of the expansion block.

Preferably, the expansion means comprise a pin which extends along an axis and is inserted in the internal cavity so as to rotate around such axis and with respect to the screw anchor between a rest position and a locking position respectively corresponding to the non-deformed configuration and the deformed configuration of the screw anchor.

The rotating movement of the pin is particularly effective in locking the screw anchor and it allows the use of a more compact and reliable mechanism.

Preferably, the pin extends along an axis transversal to the longitudinal axis of the respective tie rod, so as to facilitate the insertion of the housing. The pin and the internal cavity are formed so that the rotation of the pin between the rest position and the locking position creates an interference between at least one portion of the pin and at least one portion of the side walls of the internal cavity.

In this way, the expansion force is distributed along the screw anchor and internally to it, making the locking safer and more effective.

Preferably, the pin comprises two or more lobes distributed circumferentially around the axis, configured to push from the inside the screw anchor in the locking position.

Such configuration is particularly effective and constructively simple. Each lobe is preferably constituted by a rolling body, such as, in particular, a cylinder rotating around an axis parallel to the development axis of the pin.

Preferably, the internal cavity of the screw anchor comprises two or more recesses distributed circumferentially around the axis and configured to receive each a pin lobe in the locking position.

In this way, the user perceives the correct positioning of the pin in the locking and rest position.

In addition, the rolling cylinder allows a fluid rotation movement from the rest to the locking configuration.

Preferably, the screw anchor comprises an elastically deformable sheath suitable to come into contact with the walls delimiting the housing in the deformed configuration of the screw anchor.

The sheath allows to avoid rotation of the screw anchor integrally with the pin and to optimize the compression on the housing walls. As it is a sheath, it can be made by limiting the amount required since the actual expansion function is performed by the positioning of the lobes at the recesses.

Preferably, the elastically deformable sheath is externally fitted on the lobe support bushing, allowing to divide the functions and optimize the design of each component.

Preferably, the pin comprises a cylindrical portion extending through the end of the tie rod and a polygonal portion suitable for coupling in rotation around the axis with the bushing.

This simplifies the realization of the pin and its assembly on the tie rod. Preferably, the pin comprises a polygonal head disposed externally to the tie rod and suitable to be coupled reversibly with a control element.

Thus, the number of control elements is limited by the fact that a single control element can be used for all quick-coupling mechanisms of one or more scaffoldings. In addition, by moving away the control element, the unintentional unlocking of the quick-coupling mechanism is avoided.

The present invention will now be described with reference to the accompanying drawings which illustrate a non-limiting embodiment thereof, in which:
- Figure 1 is a schematic perspective view of a possible embodiment of a mobile scaffolding according to the present invention;
- Figure 2 is a perspective schematic view of a detail of a scaffolding according to the present invention;
- Figure 3 shows the detail of Figure 2 with separate components;
- Figures 4a-4c show a sectional view according to the trace IV-IV of Figure 3, respectively in three different operating conditions; and
- Figure 5 shows the detail of Figure 2 with separate components and in accordance with a second embodiment.

With reference to the accompanying Figures, number 1 globally indicates a mobile scaffolding in accordance with the present invention.

The illustrated mobile scaffolding 1 is commonly known as an access platform and is defined by a frame having a metallic tubular structure comprising at least two pairs of lateral shoulders 2. Alternatively, the mobile scaffolding could be realized by a ladder.

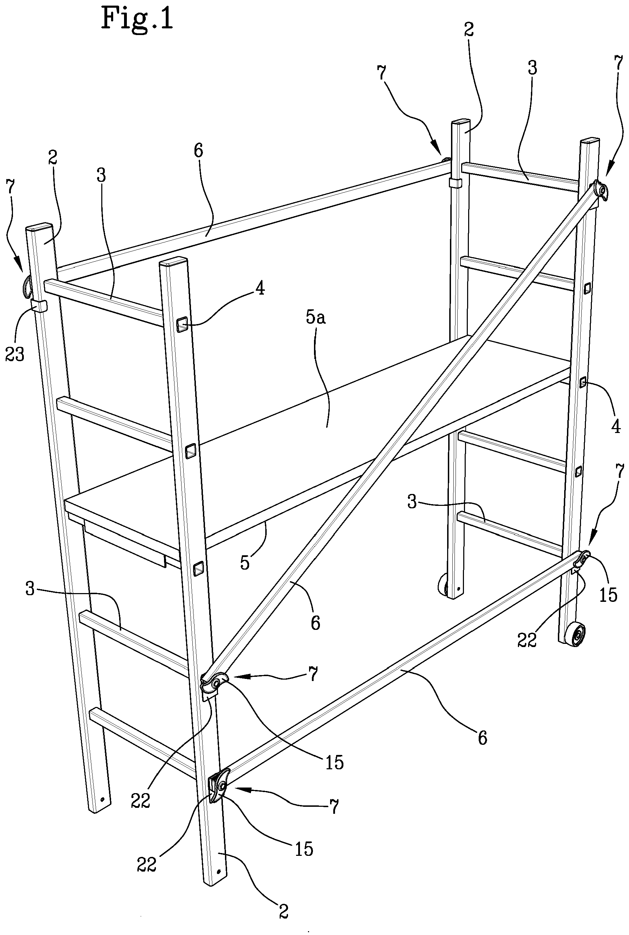

With reference to Figure 1, the two pairs of lateral shoulders 2 are suitable to be arranged vertically parallel to each other.

The two shoulders of a pair are connected to each other, for example by a plurality of preferably horizontal steps 3.

The terms "horizontal" and "vertical" are used with reference to the normal position used for the scaffolding, for example illustrated in Figure 1.

According to a possible embodiment, the appended figures of which define a non-limiting example, the ends of each step 3 are inserted in through openings obtained by trimming in the respective lateral shoulders 2, and secured by means of resealing and/or welding. Therefore, at each step 3, the vertical shoulders 2 have respective holes inside which a housing 4 is formed, which can be employed for the connection with further structural elements.

The housing 4 communicates with the outside through an opening axially aligned with the respective step 3.

Alternatively, the housings 4 may be formed in the lateral shoulders in positions which do not correspond to the steps.

In accordance with a possible embodiment, the appended figures of which define a non-limiting example, the frame defining the mobile scaffolding 1 may comprise at least a pair of horizontal cross members 5 connecting together the pairs of vertical lateral shoulders 2.

Furthermore, between the pair of lateral shoulders 2, for example, a planking level 5a on which the operators work is arranged horizontally and preferably supported by a pair of steps 3.

In particular, the frame of the scaffolding 1 represents an articulated quadrilateral: therefore it is necessary to have at least one tie rod 6 in place which acts as a stiffening element, preferably disposed diagonally between the pairs of lateral shoulders 2.

The tie rod 6 can be connected to the lateral shoulders 2 at two respective steps 3, preferably disposed at different heights, by means of a quick-coupling mechanism 7, permanently connected to each end 6b of the tie rod 6. Generally, the tie rod 6 can be connected to the lateral shoulders 2 at two respective housing 4, preferably disposed at different heights.

In particular, the quick-coupling mechanism 7 at each end of each tie rod 6 has an axial development orthogonal to the axis 6a of the tie rod 6 and is inserted into the housing 4 of the pair of lateral shoulders 2.

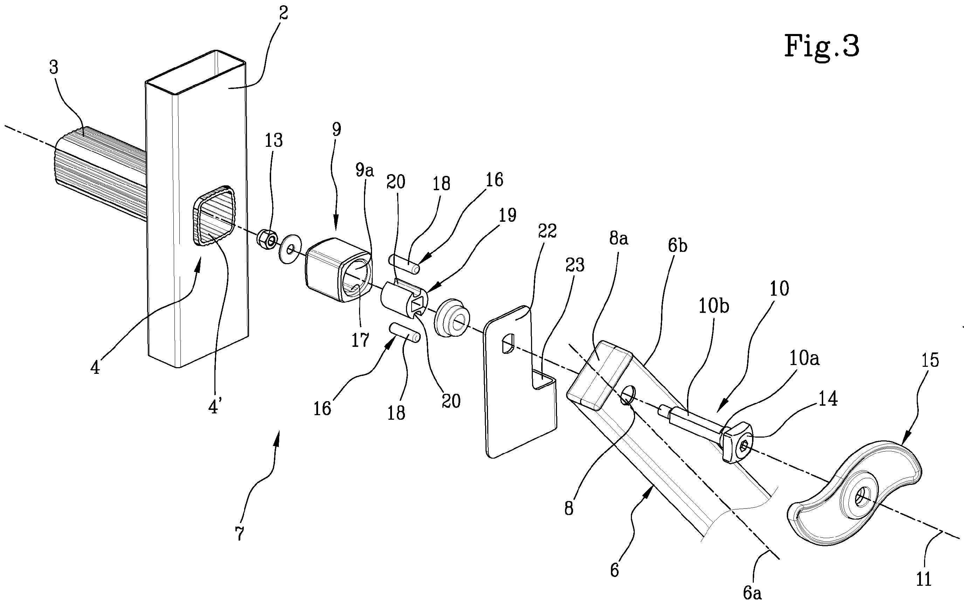

The tie rod 6, in correspondence of each end 6b, has a through hole 8 (Figure 3).

Preferably, two or more tie rods 6 can be present, preferably disposed in the shape of a cross. In general, the quick-coupling mechanism 7 can be used in any structural element suitable to connect the pairs of lateral shoulders 2.

The tie rod 6 can be, for example, a metal bar having a rectangular or round section (as shown in the figures).

In the first case, at the ends 6b of each tie rod 6 an insert 8a is preferably placed, which is preferably made of plastic material, suitable to fill the vacuum inside the end 6b of the tie rod 6 and to provide stiffness and support to the tie rod 6 at that precise point. In particular, the insert 8a has a through hole 8b suitable to coincide with the through hole 8.

In the second case, not shown, the end of the tie rod can be flattened, for example by crushing. Therefore, the particular conformation does not require the use of filling elements.

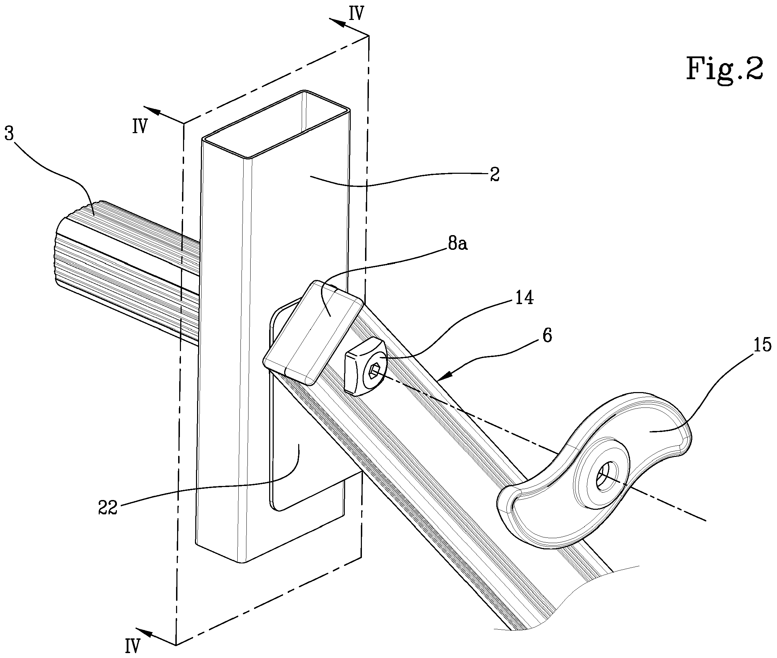

With particular reference to Figure 2, the quick-coupling mechanism 7 comprises an elastically deformable screw anchor 9, which can be axially inserted within the housing 4 to which the tie rod 6 is connected.

Particularly the screw anchor 9 is elastically deformable between a non-deformed configuration in which it can be axially inserted and removed within one of the housings 4 and a deformed configuration in which it interferes with walls 4' delimiting the housing itself for connecting the end of the tie rod 6 to the side shoulders 2.

The quick-coupling mechanism 7 comprises expansion means disposed in an internal cavity 9a of the screw anchor and configured to assume a rest configuration in which the screw anchor 9 is in the non-deformed configuration and a locking configuration in which the screw anchor 9 is in the deformed configuration. In the locking configuration, the expansion means generate an expansion force directed radially with respect to the screw anchor 9. Particularly, the expansion force pushes from the inside the screw anchor 9 against the walls 4' delimiting the housing 4.

The expansion means comprise a pin 10 which extends along an axis 11 and is inserted in the internal cavity 9a so as to rotate around the axis 11 and with respect to the screw anchor 9 between a rest position and a locking position respectively corresponding to the non-deformed configuration and the deformed configuration of the screw anchor 9. Particularly, the pin 10 extends along an axis 11 transverse to the longitudinal axis 6a of the corresponding tie rod 6.

Moreover, the screw anchor 9 is connected to the end 6b of the tie rod 6 by means of the pin 10. Particularly, the pin 10 passes through the end 6b of the tie rod 6, inside the hole 8.

In accordance to a possible embodiment, the pin 10 comprises a shaped bushing 19.

Preferably, the pin 10 comprises a cylindrical portion 10a having a rectangular section extending through the end of the tie rod 6 and a polygonal portion 10b coupled in rotation around the axis 11 with the bushing 19. Furthermore, the pin 10 may include a threaded portion 10c suitable to be coupled with a nut 13.

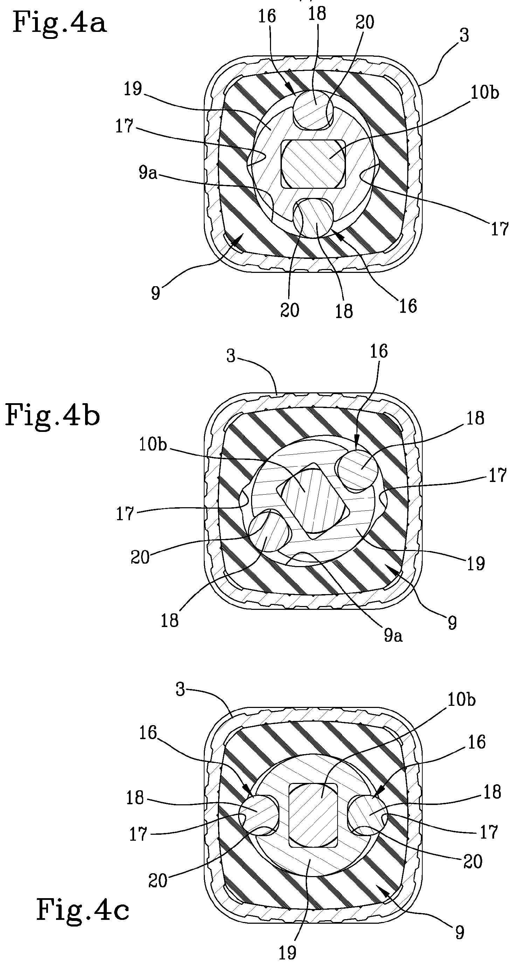

Preferably, the pin 10 comprises a polygonal head 14 disposed outside the tie rod 6 (and opposed to the screw anchor 9) and suitable to be reversibly coupled with a control element 15 such as a lever or a knob. Furthermore, the pin 10 comprises two or more lobes 16 distributed circumferentially around the axis 11 and configured to push the screw anchor 9 from the inside in the locking position. Preferably, the lobes 16 are associated in the bushing 19 (Figure 4a).

Preferably, the pin 10 and the internal cavity 9a are formed so that the rotation of the pin 10 between the rest position and the locking position creates an interference between at least one portion of the pin 10 and at least one portion of the walls defining the internal cavity 9a so as to expand the screw anchor 9.

In particular, the internal cavity 9a of the screw anchor 9 has a substantially elliptical conformation defining the respective housing of the lobes 16 in the resting configuration (Figure 4a) at the focuses of said elliptical configuration. The cavity 9a also comprises, at the rectilinear sections of said elliptical configuration, two or more recesses 17, each configured to receive a lobe 16 of the pin in the locking position (Figure 4c).

In accordance with a possible embodiment, each lobe 16 comprises a rolling body 18 which slides on the internal walls defining the internal cavity 9a of the anchor 9.

Preferably, each rolling body 18 has a cylindrical conformation with a circular section to be rotatable around an axis of parallel development to the longitudinal axis 11 of the pin 10.

In this situation, it is to be noted that the rolling bodies 18 are housed inside respective housing seats 20 circumferentially formed on the outer surface of the bushing 19 (Figure 3). Advantageously, each body 18 is rotatable within the respective seat 20 during the rotation of the pin 10 and, therefore, of the bushing 19 to be slidable on the internal surface of the cavity 9a.

As seen in cross-section of the views of Figures 4a to 4c, the bushing has a circular section inserted inside the elliptical profile of the cavity 9a. In this situation, it should be noted that, in correspondence of the focuses of the anchor 9, the thickness of the anchor 9 is smaller than the straight portions where said recesses 17 are made.

Because of this difference in thickness and of the elliptical conformation of cavity 9a, the bodies 18, when rolling at recesses 17 (greater thickness section of the anchor), exert an expansion force F within the screw anchor 9 (Figure 4c).

Preferably, the screw anchor 9 comprises an elastically deformable sheath 21, suitable to be in contact with the walls 4' delimiting the housing 4 in the deformed configuration of the screw anchor. In particular, the contact between the walls 4' and the sheath 21 is such as to ensure that the screw anchor 9 remains firmly in the housing 4 while the pin 10 rotates about the axis 11.

The elastically deformable sheath 21 is externally fitted on the bushing 19 and forms the screw anchor 9 together with it.

The shape of the lobes 16 and of the anchor 9 is such as to accurately define the rest position and the locking position of the pin 10. In fact, in the locking configuration, they are housed inside the recesses 17 which define a mechanical stop of the rotation of the bushing 19, adapted to hold the lobes permanently in the locking condition (expansion - Figure 4c).

In the rest condition, however, the lobes are housed in areas close to the focuses of the elliptical conformation of the cavity 9a and hence in a space where the anchor is not expanded (Figure 4a).

The outer edge of each housing 4 has a perimeter widening 4a, obtained, for example, by the resealing and/or welding operation carried out during the engagement phase of the end of step 3 to the respective lateral shoulder 2. The widening 4a creates a mechanical interference with the compressed anchor 9, so as to avoid accidental disengagement of the anchor 9.

The scaffolding 1 may further comprise a safety device 22 which maintains the connection between the tie rod 6 and the vertical lateral shoulder 2 even when the screw anchor 9, although inserted into the housing 4, is not deformed.

Such safety device 22 comprises a suitably shaped plate, hinged to axis 11 of mechanism 7.

The plate comprises a U-shaped portion 23 which, in working condition, embraces the vertical shoulder 2 to which the tie rod 6 is connected. The plate can be positioned in the working condition as a result of an angular rotation about its hinging axis 11, starting from a resting condition in which the U-shaped portion 23 is disengaged from the vertical shoulder 2, so as to allow the transverse movement of the tie rod 6 for inserting and extracting the anchor 9 from housing 4.

The assembly and disassembly of scaffolding 1 is quick and the tie rods 6, through the described quick-coupling mechanism, are securely connected to the rest of the frame.

A simple angular rotation of the control element 15, such as a lever or knob, ensures that the tie rod is firmly connected to the rest of the frame without the risk of accidental detachment. The control element 15 is then extracted from the polygonal head 14 in order to be applied to another mechanism 7.

It is to be considered that the control element 15 is preferably ergonomically shaped to be easily manoeuvrable by the operator. However, the shape of the element 15 can be any one, depending on the various operational and/or aesthetic needs.

The quick coupling mechanism is permanently connected to the tie rod so that no accidental loss of structural elements can occur during disassembly or transport. At the same time, the control element 15 does not remain permanently connected to the tie rod to prevent accidental releases.

When assembling the mechanism 7 on the tie rod 6, the pin 10 is inserted from the outside into the hole 8 of the tie rod and the shaped bushing 19 is fitted on the polygonal portion 10b. Preferably, the insert 8a is inserted into the end 6b of the tie rod so that the pin 10 passes through it.

The screw anchor 9 is mounted on the pin 10, in particular on the shaped bushing 19.

By means of the nut 13, the mechanism 7 is firmly fixed to the tie rod 6 and the elements composing it are packed on the axis 11.

In use, the tie rod 6 is approached to the lateral shoulder 2 by inserting the pin 10 and the screw anchor 9 into the housing 4. The control element 15 is associated with the polygonal head 14 to rotate the pin 10 about the axis 11 from the rest position to the locking position. Due to this rotation, the rolling bodies 18 slide on the inner surface of the cavity 9a, rolling until reaching the recesses 17. In this situation, the bodies 18 push on recesses 17 in the outward direction by applying forces F from within the screw anchor 9. In the locking position, the bodies 18 compress the sheath 21 against the walls 4' of the housing 4.

Once locking is achieved, the control element 15 is detached from the polygonal head 14 and used to lock and unlock another mechanism 7. In other words, only one control element 15 can be used for one or more mobile scaffoldings 1.

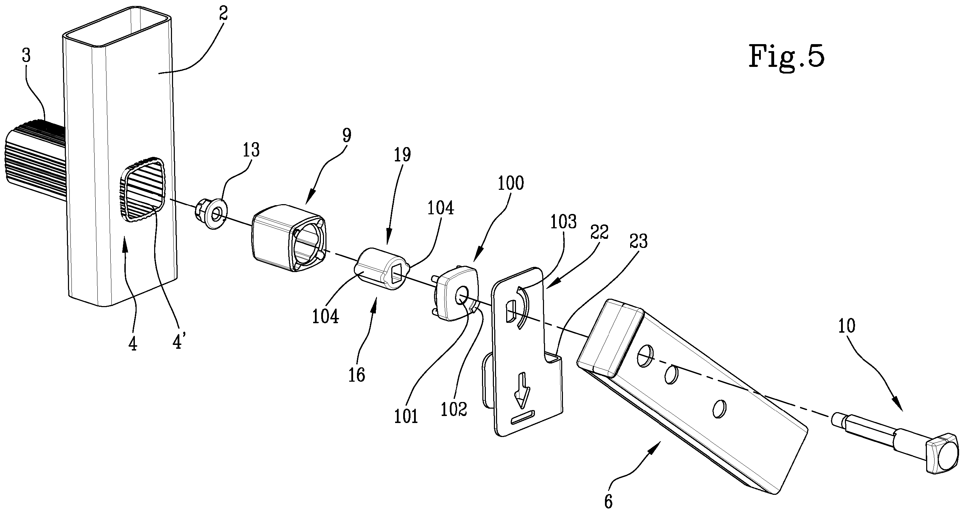

In accordance with a second embodiment illustrated in Figure 5, the use of the control element is not provided. In this situation, the rotation of the pin 10 and of the respective bushing 19 is effected by manual handling of the safety device 22. In this regard, it is to be noted that the plate defining the device 22 is operatively engaged with the pin 10 so as to rotate the pin 10 itself during its handling to define the engagement with the respective lateral shoulder 2. In other words, the safety device 22 is used as a control element for the implementation of the stable coupling.

In this embodiment, also provided is an anti-slip element 100 interposed between the device 22 and the bushing 19. This device 100 has a hole 101 for the passage of the pin 10 and a slider 102 extending from the device 100 itself and which can be inserted into a respective arcuate slot 103 formed on the device 22.

Advantageously, during rotation of the device 22 to define the deformed configuration of the anchor 9, the slider 102 is rotated within the arcuate slot 103.

In this way, the stroke of the device 22 is limited only to a circular path defined by said slot 103 to prevent any involuntary rotations of the device 22. In other words, the slot 103, which internally houses the sliding slider 102, defines a "stroke end" for the sliding of slider 102, and then for the movement of device 22.

Further, in this embodiment, the lobes 16 of the bushing 19 are constituted by protrusions 104 which slide, by dragging, within the screw anchor 9. Consequently, the bushing 19 is in a single body, thus eliminating the presence of separate parts.

The present invention achieves the intended purposes thanks to the presence of expansion means disposed in the internal cavity of the screw anchor and configured to assume a rest configuration in which the screw anchor is in the non-deformed configuration and a locking configuration in which the screw anchor is in the deformed configuration. Particularly, the expansion means generate an expansion force F directed radially with respect to the screw anchor and able to push from the inside the screw anchor against the walls 4' delimiting the housing 4.

This aspect allows to assemble the scaffolding quickly and easily, under any condition of use, and to have a constant locking during the useful life of the scaffolding, regardless of wear and/or the presence of dirt.

This aspect also allows to keep both reduced costs and a small number of components, for example by making the locking independent of the presence of the control element 15 and thus allowing detachment once locking is achieved.

## Claims

1. Mobile scaffolding (1) comprising:
at least two pairs of lateral shoulders (2) configured to be vertically arranged parallel to each other, said lateral shoulders (2) having housings (4) communicating with the outside,
at least one tie rod (6) suitable to be mounted between the two pairs of lateral shoulders (2), and
at least one quick-coupling mechanism (7) permanently connected to one end (6b) of the tie rod (6) and comprising an elastically deformable screw anchor (9) between a non-deformed configuration in which it can be axially inserted and removed within one of said housings (4) and a deformed configuration in which it interferes with walls (4') delimiting said housing for connecting said end (6b) of said tie rod (6) to said side shoulders (2),
**characterized in that** said quick-coupling mechanism (7) comprises expansion means disposed in an internal cavity (9a) of said screw anchor (9) and configured to assume a rest configuration in which said screw anchor (9) is in said non-deformed configuration and a locking configuration in which said screw anchor (9) is in said deformed configuration, and
in which, in said locking configuration, said expansion means generate an expansion force (F) directed radially compared to the screw anchor (9), said expansion force (F) pushes from the inside the screw anchor (9) against the walls (4') delimiting said housing (4).

2. Scaffolding according to claim 1, in which said expansion means comprise a pin (10) which extends along an axis (11) and is inserted in said internal cavity (9a) so as to rotate around said axis (11) and compared to said screw anchor (9) between a rest position and a locking position respectively corresponding to said non-deformed configuration and said deformed configuration of the screw anchor (9).

3. Scaffolding according to claim 2, wherein said pin (10) extends along an axis (11) transverse to the longitudinal axis (6a) of the corresponding tie rod (6).

4. Scaffolding according to claim 2 or 3, wherein said pin (10) and said internal cavity (9a) are formed so that the rotation of said pin (10) between the rest position and the locking position creates an interference between at least a portion of the pin (10) and at least a portion of the side walls of the internal cavity (9a).

5. Scaffolding according to one or more of claims 2 to 4, wherein said pin (10) comprises at least two lobes (16) circumferentially distributed around said axis (11) configured to push from the inside said screw anchor (9) in said locking position.

6. Scaffolding according to the preceding claim, wherein each lobe comprises a rolling body (18) sliding on said internal cavity (9a) of the screw anchor (9) and rotatable around a development axis parallel to said longitudinal axis (11).

7. Scaffolding according to claim 6, wherein said internal cavity (9a) of said screw anchor (9) comprises at least two recesses (17) circumferentially distributed around said axis (11) and configured to receive each one lobe (16) of said pin (10) in said locking position.

8. Scaffolding according to claim 6 or 7, wherein each rolling body (18) has a cylindrical shape with circular section.

9. Scaffolding according to any of claims 6 to 8, in which said pin (10) also comprises a bushing (19) having at least two housing seats (20) of said rolling bodies (18) circumferentially formed on the outer surface of the bushing (19); said bodies (18) being rotatable within said housing seats (20).

10. Scaffolding according to one or more of claims 2 to 9, wherein said screw anchor (9) comprises an elastically deformable sheath (21) suitable to be in contact with the walls (4') delimiting said housing (4) in said deformed configuration of the screw anchor (9).

11. Scaffolding according to claim 10 when dependent upon claim 9, wherein said elastically deformable sheath (21) externally fits said bushing (19).

12. Scaffolding according to one or more of claims 9 to 11, wherein said pin (10) comprises a cylindrical portion (10a) passing through said end (6b) of said tie rod (6) and a polygonal portion (10b) coupled in rotation around said axis (11) with the bushing (19).

13. Scaffolding according to one or more of claims 2 to 11, wherein said pin (10) comprises a polygonal head (14) externally arranged to the tie rod (6) and suitable to be reversibly coupled with a control element (15).

## Patentansprüche

1. Mobiles Gerüst (1) umfassend:
mindestens zwei Paare von seitlichen Schultern (2), konfiguriert, um vertikal und parallel zueinander angeordnet zu werden, wobei die seitlichen Schultern (2) mit der Außenseite in Kommunikation stehende Gehäuse (4) aufweisen,
mindestens eine Zugstange (6), die geeignet ist, um zwischen den beiden Paaren von seitlichen Schultern (2) montiert zu werden, und
mindestens einen Schnellkupplungsmechanismus (7), der fest mit einem Ende (6b) der Zugstange (6) verbunden ist und umfassend einen elastisch verformbaren Schraubanker (9) zwischen einer nicht verformten Konfiguration, in der er innerhalb eines der Gehäuse (4) axial eingesetzt und entfernt werden kann und einer verformten Konfiguration, in der er mit den Wänden (4') interferiert, die das Gehäuse begrenzen, um das Ende (6b) der Zugstange (6) mit den Seitenschultern (2) zu verbinden, **dadurch gekennzeichnet, dass** der Schnellkupplungsmechanismus (7) Expansionsmittel umfasst, die in einem inneren Hohlraum (9a) des Schraubankers (9) angeordnet sind und konfiguriert sind, um eine Ruhekonfiguration einzunehmen, in der der Schraubanker (9) sich in der nicht verformten Konfiguration befindet, und eine Verriegelungskonfiguration, in der sich der Schraubanker (9) in der verformten Konfiguration befindet, und in der die Expansionsmittel in der Verriegelungskonfiguration eine Expansionskraft (F) erzeugen, die radial im Vergleich zu dem Schraubanker (9) gerichtet ist, wobei die Expansionskraft (F) von innen des Schraubankers (9) gegen die Wände (4') drückt, die das Gehäuse (4) begrenzen.

2. Gerüst nach Anspruch 1, wobei die Expansionsmittel einen Stift (10) umfassen, der sich entlang einer Achse (11) erstreckt und in den inneren Hohlraum (9a) eingesetzt ist, um sich um die Achse (11) und im Vergleich mit dem Schraubanker (9) zwischen einer Ruheposition und einer Verriegelungsposition zu drehen, die jeweils der nicht verformten Konfiguration und der verformten Konfiguration des Schraubankers (9) entsprechen.

3. Gerüst nach Anspruch 2, wobei sich der Stift (10) entlang einer Achse (11) quer zur Längsachse (6a) der entsprechenden Zugstange (6) erstreckt.

4. Gerüst nach Anspruch 2 oder 3, wobei der Stift (10) und der innere Hohlraum (9a) so ausgebildet sind, dass die Drehung des Stiftes (10) zwischen der Ruheposition und der Verriegelungsposition eine Interferenz zwischen mindestens einem Abschnitt des Stifts (10) und mindestens einem Abschnitt der Seitenwände des inneren Hohlraums (9a) erzeugt.

5. Gerüst nach einem oder mehreren der Ansprüche 2 bis 4, wobei der Stift (10) mindestens zwei Loben (16) umfasst, die in Umfangsrichtung um die Achse (11) verteilt sind, konfiguriert, um den Schraubanker (9) in die Verriegelungsposition von innen zu drücken.

6. Gerüst nach dem vorhergehenden Anspruch, wobei jede Lobe einen Wälzkörper (18) umfasst, der auf dem inneren Hohlraum (9a) des Schraubankers (9) gleitet und um eine Entwicklungsachse parallel zu der Längsachse (11) drehbar ist.

7. Gerüst nach Anspruch 6, wobei der innere Hohlraum (9a) des Schraubankers (9) mindestens zwei Ausnehmungen (17) umfasst, die in Umfangsrichtung um die Achse (11) verteilt sind und zur Aufnahme einer jeden Lobe (16) des Stiftes (10) in der Verriegelungsposition konfiguriert sind.

8. Gerüst nach Anspruch 6 oder 7, wobei jeder Wälzkörper (18) eine zylindrische Form mit kreisförmigem Querschnitt aufweist.

9. Gerüst nach einem der Ansprüche 6 bis 8, wobei der Stift (10) auch eine Buchse (19) aufweisend mindestens zwei Gehäusesitzen (20) der Wälzkörper (18) umfasst, die an der Außenfläche der Buchse (19) in Umfangsrichtung ausgebildet sind, wobei die Körper (18) innerhalb der Gehäusesitze (20) drehbar sind.

10. Gerüst nach einem oder mehreren der Ansprüche 2 bis 9, wobei der Schraubanker (9) eine elastisch verformbare Hülle (21) umfasst, die geeignet ist, mit den Wänden (4') in Kontakt zu stehen, die das Gehäuse (4) in der verformten Konfiguration des Schraubankers (9) begrenzen.

11. Gerüst nach Anspruch 10, wenn abhängig von Anspruch 9, wobei die elastisch verformbare Hülle (21) außen zu der Buchse (19) passt.

12. Gerüst nach einem oder mehreren der Ansprüche 9 bis 11, wobei der Stift (10) einen zylindrischen Abschnitt (10a), der durch das Ende (6b) der Zugstange (6) verläuft und einen polygonalen Abschnitt (10b) umfasst, der in Drehung um die Achse (11) mit der Buchse (19) verbunden ist.

13. Gerüst nach einem oder mehreren der Ansprüche 2 bis 11, wobei der Stift (10) einen polygonalen Kopf (14) umfasst, der außen an der Zugstange (6) angeordnet ist und dazu geeignet ist, mit einem Steuerelement (15) reversibel gekuppelt zu werden.

## Revendications

1. Échafaudage roulant (1) comprenant :
au moins deux paires d'épaulements latéraux (2) configurées pour être verticalement disposées de façon parallèle réciproquement, lesdits épaulements latéraux (2) comportant des logements (4) communiquant avec l'extérieur,
au moins une barre d'accouplement (6) pouvant être montée entre les deux paires d'épaulements latéraux (2), et
au moins un mécanisme à accouplement rapide (7) relié en permanence à une extrémité (6b) de la barre d'accouplement (6) et comprenant une vis d'ancrage (9) déformable élastiquement entre une configuration non déformée dans laquelle elle peut être axialement introduite à / et retirée de l'intérieur de l'un desdits logements (4) et une configuration déformée dans laquelle elle interfère avec des cloisons (4') délimitant ledit logement pour raccorder ladite extrémité (6b) de ladite barre d'accouplement (6) auxdits épaulements latéraux (2), **caractérisé en ce que** ledit mécanisme à accouplement rapide (7) comprend des moyens d'expansion disposés dans une cavité interne (9a) de ladite vis d'ancrage (9) et configurés pour adopter une configuration de repos dans laquelle ladite vis d'ancrage (9) se trouve dans ladite configuration non déformée et une configuration de blocage dans laquelle ladite vis d'ancrage (9) se trouve dans ladite configuration déformée, et dans lequel, dans ladite configuration de blocage, lesdits moyens d'expansion génèrent une force d'expansion (F) orientée radialement par rapport à la vis d'ancrage (9), ladite force d'expansion (F) pousse de l'intérieur la vis d'ancrage (9) contre les cloisons (4') délimitant ledit logement (4).

2. Échafaudage selon la revendication 1, dans lequel lesdits moyens d'expansion comprennent un goujon (10) qui se prolonge le long d'un axe (11) et est introduit dans ladite cavité interne (9a) de sorte à tourner autour dudit axe (11) et par rapport à ladite vis d'ancrage (9) entre une position de repos et une position de blocage correspondant respectivement à ladite configuration non déformée et à ladite configuration déformée de la vis d'ancrage (9).

3. Échafaudage selon la revendication 2, dans lequel ledit goujon (10) se développe le long d'un axe (11) transversal à l'axe longitudinal (6a) de la barre d'accouplement (6) correspondante.

4. Échafaudage selon la revendication 2 ou 3, dans lequel ledit goujon (10) et ladite cavité interne (9a) sont formés de sorte que la rotation dudit goujon (10), entre la position de repos et la position de blocage, crée une interférence entre au moins une partie du goujon (10) et au moins une partie des cloisons latérales de la cavité interne (9a).

5. Échafaudage selon l'une ou plusieurs des revendications de 2 à 4, dans lequel ledit goujon (10) comprend au moins deux lobes (16) répartis sur la circonférence autour dudit axe (11) configurés pour pousser de l'intérieur ladite vis d'ancrage (9) dans ladite position de blocage.

6. Échafaudage selon la revendication précédente, dans lequel chaque lobe comprend un corps roulant (18) coulissant sur ladite cavité interne (9a) de la vis d'ancrage (9) et pouvant tourner autour d'un axe de développement parallèle au dit axe longitudinal (11).

7. Échafaudage selon la revendication 6, dans lequel ladite cavité interne (9a) de ladite vis d'ancrage (9) comprend au moins deux renfoncements (17) répartis sur la circonférence autour dudit axe (11) et configurés pour recevoir chacun un lobe (16) dudit goujon (10) dans ladite position de blocage.

8. Échafaudage selon la revendication 6 ou 7, dans lequel chaque corps roulant (18) a une forme cylindrique à section circulaire.

9. Échafaudage selon l'une quelconque des revendications de 6 à 8, dans lequel ledit goujon (10) comprend aussi une bague (19) comportant au moins deux sièges de logement (20) desdits corps roulants (18) formés sur la circonférence sur la surface extérieure de la bague (19) ; lesdits corps (18) pouvant tourner à l'intérieur desdits sièges de logement (20).

10. Échafaudage selon l'une ou plusieurs des revendications de 2 à 9, dans lequel ladite vis d'ancrage (9) comprend une gaine déformable élastiquement (21) adaptée pour être en contact avec les cloisons (4') délimitant ledit logement (4) dans ladite configuration déformée de la vis d'ancrage (9).

11. Échafaudage selon la revendication 10 lorsqu'elle dépend de la revendication 9, dans lequel ladite gaine déformable élastiquement (21) correspond extérieurement à ladite bague (19).

12. Échafaudage selon l'une ou plusieurs des revendications de 9 à 11, dans lequel ledit goujon (10) comprend une partie cylindrique (10a) passant à travers ladite extrémité (6b) de ladite barre d'accouplement (6) et une partie polygonale (10b) couplée en rotation autour dudit axe (11) avec la bague (19).

13. Échafaudage selon l'une ou plusieurs des revendications de 2 à 11, dans lequel ledit goujon (10) comprend une tête polygonale (14) extérieurement disposée par rapport à la barre d'accouplement (6) et pouvant être couplée de façon amovible à un élément de commande (15).
